# EUROPEAN PATENT APPLICATION

(11) **EP 2 216 081 A1**
(43) Date of publication of application: **11.08.2010**
(21) Application number: 08844352.8
(22) Date of filing: 19.09.2008
(51) Int. Cl.: A63F 13/10, A63F 13/00

(54) **GAME DEVICE, GAME DEVICE CONTROL METHOD, PROGRAM, AND INFORMATION STORAGE MEDIUM**

(30) Priority: 02.11.2007 JP 2007286495
(71) Applicant: Konami Digital Entertainment Co., Ltd., Tokyo 107-8324 (JP)
(72) Inventor: CHOSOGABE, Akiyoshi, Tokyo 107-8324 (JP)
(74) Representative: Müller-Boré & Partner Patentanwälte
(86) International application number: PCT/JP2008/066966
(87) International publication number: WO 2009/057393

(57) **Abstract**

To provide a game device capable of preventing viewing of an operation-subject player character from becoming difficult due to interference of a teammate player character in a sport game which is played between an operation subject team, to which the operation-subject player character which moves according to operation by a user and the teammate player character belong, and an opposing team. A movement-target position acquiring section (62) acquires a movement target position of the operation-subject player character based on a content of the operation by the user. A determination section (64) determines whether or not the teammate player character is positioned within a decision area specified based on the movement target position. A teammate player control section (66) moves the teammate player character away from the movement target position in a case where it is determined that the teammate player character is positioned within the decision area.

## Description

### TECHNICAL FIELD

The present invention relates to a game device, a control method for a game device, a program, and an information storage medium.

### BACKGROUND ART

There are known games of sports which are played between an operation subject team, to which an operation-subject player character which moves according to operation by a user and one or a plurality of teammate player characters belong, and an opposing team. For example, there are known a soccer game, a basketball game, an ice hockey game, and so forth.
Patent Document 1: JP 2007-259988 A

### DISCLOSURE OF THE INVENTION

### Problems to be Solved by the Invention

In such a sport game as mentioned above, if a teammate player character is positioned at a movement target position designated for an operation-subject player character by a user, the teammate player character may interfere with the operation-subject character, making the operation-subject character difficult to see. This may interfere with, for example, the operation for the operation-subject player character.

The present invention has been made in view of the above-mentioned problem, and it is therefore an object of the present invention to provide a game device, a control method for a game device, a program, and an information storage medium, which can prevent viewing of an operation-subject character from becoming difficult due to interference of a teammate player character in a sport game which is played between an operation subject team, to which an operation-subject player character which moves according to operation by a user and a teammate player character belong, and an opposing team.

### Means for Solving the Problems

In order to solve the above-mentioned problem, a game device according to the present invention is a game device that executes a sport game which is played between an operation subject team, to which an operation-subject player character which moves according to operation by a user and a teammate player character belong, and an opposing team, the game device including: player-character position storage means for storing a position of the operation-subject player character and a position of the teammate player character; movement-target position acquiring means for acquiring a movement target position of the operation-subject player character based on a content of the operation by the user; determination means for determining whether or not the teammate player character is positioned within a decision area specified based on the movement target position; and teammate player control means for moving the teammate player character away from the movement target position in a case where it is determined that the teammate player character is positioned within the decision area.

Further, a control method according to the present invention is a control method for a game device that executes a sport game which is played between an operation subject team, to which an operation-subject player character which moves according to operation by a user and a teammate player character belong, and an opposing team, the control method including: a step of reading a stored content of player-character position storage means storing a position of the operation-subject player character and a position of the teammate player character; a movement-target position acquiring step of acquiring a movement target position of the operation-subject player character based on a content of the operation by the user; a determination step of determining whether or not the teammate player character is positioned within a decision area specified based on the movement target position; and a teammate player control step of moving the teammate player character away from the movement target position in a case where it is determined that the teammate player character is positioned within the decision area.

Further, a program according to the present invention causes a computer such as a consumer game machine (stationary game machine), a portable game machine, an arcade game machine, a mobile phone, a personal digital assistant (PDA), or a personal computer to function as a game device that executes a sport game which is played between an operation subject team, to which an operation-subject player character which moves according to operation by a user and a teammate player character belong, and an opposing team, the program causing the computer to function as: player-character position storage means for storing a position of the operation-subject player character and a position of the teammate player character; movement-target position acquiring means for acquiring a movement target position of the operation-subject player character based on a content of the operation by the user; determination means for determining whether or not the teammate player character is positioned within a decision area specified based on the movement target position; and teammate player control means for moving the teammate player character away from the movement target position in a case where it is determined that the teammate player character is positioned within the decision area.

Further, an information storage medium according to the present invention is a computer-readable information storage medium recording the above-mentioned program. A program delivery device according to the present invention includes an information storage medium recording the program, reads the program from the information storage medium, and delivers the program. A program delivery method according to the present invention is a program delivery method of reading the program from an information storage medium recording the program, and delivering the program.

According to the present invention, a sport game which is played between an operation subject team, to which an operation-subject player character which moves according to operation by a user and a teammate player character belong, and an opposing team is executed. Further, according to the present invention, a position of the operation-subject player character and a position of the teammate player character are stored. Further, a movement target position of the operation-subject player character is acquired based on a content of the operation by the user. Whether or not the teammate player character is positioned within a decision area specified based on the movement target position is determined. Then, in a case where it is determined that the teammate player character is positioned within the decision area, the teammate player character is moved away from the movement target position. According to the present invention, it becomes possible to prevent viewing of an operation-subject character from becoming difficult due to interference of the teammate player character.

Further, according to one aspect of the present invention, the teammate player control means may include means for deciding a moving direction of the teammate player character based on a direction from the movement target position toward a current position of the teammate player character in the case where it is determined that the teammate player character is positioned within the decision area.

Further, according to another aspect of the present invention, the game may be a sport game which is played in a predetermined area, and the teammate player control means may control the teammate player character so as not to move out of the predetermined area in a case of moving the teammate player character away from the movement target position.

Further, according to another aspect of the present invention, the teammate player control means may include: means for deciding a moving direction of the teammate player character in the case where it is determined that the teammate player character is positioned within the decision area; means for determining whether or not a moving distance to a boundary of the predetermined area is less than a predetermined reference distance in a case where it is assumed that the teammate player character is moved in the moving direction; means for correcting the moving direction of the teammate player character in a case where it is determined that the moving distance to the boundary of the predetermined area is less than the reference distance; and means for moving the teammate player character in the moving direction by the reference distance.

Further, according to another aspect of the present invention, the teammate player control means may include: means for storing moving direction information on a moving direction of the teammate player character in association with each of a plurality of partial areas set in the predetermined area; and means for deciding the moving direction of the teammate player character based on the moving direction information associated with one of the plurality of partial areas which includes a current position of the teammate player character, in the case where it is determined that the teammate player character is positioned within the decision area.

Further, according to another aspect of the present invention, the game device may include parameter storage means for storing a teamwork level parameter indicating a teamwork level between the operation-subject player character and the teammate player character, and the teammate player control means may move the teammate player character away from the movement target position based on the teamwork level parameter indicating the teamwork level between the operation-subject player character and the teammate player character, in the case where it is determined that the teammate player character is positioned within the decision area.

Further, according to another aspect of the present invention, the teammate player control means may include: means for determining whether or not the teamwork level parameter satisfies a predetermined condition; and means for moving the teammate player character away from the movement target position in a case where the teamwork level parameter indicating the teamwork level between the teammate player character which is determined to be positioned within the decision area, and the operation-subject player character, satisfies the predetermined condition.

Further, according to another aspect of the present invention, the teammate player control means may include means for waiting initiation of movement of the teammate player character based on the teamwork level parameter indicating the teamwork level between the teammate player character and the operation-subject player character.

Further, according to another aspect of the present invention, the determination means may include means for controlling a size of the decision area based on a distance between the operation-subject player character and the movement target position.

Further, according to another aspect of the present invention, the teammate player control means may include: means for determining whether or not a distance between the operation-subject player character and the movement target position is equal to or less than a reference distance; and means for moving the teammate player character away from the movement target position in a case where the distance between the operation-subject player character and the movement target position is equal to or less than the reference distance.

### BRIEF DESCRIPTION OF THE DRAWINGS

FIG. 1 is a diagram illustrating a hardware configuration of a game device according to an embodiment of the present invention;
FIG. 2 is a diagram illustrating an example of an operation input unit;
FIG. 3 is a diagram illustrating an example of a controller;
FIG. 4 is a diagram illustrating an example of a virtual three-dimensional space;
FIG. 5 is a diagram illustrating an example of a game screen;
FIG. 6 is a diagram illustrating another example of the game screen;
FIG. 7 is a functional block diagram of the game device according to the embodiment;
FIG. 8 is a diagram illustrating an example of game situation data;
FIG. 9 is a diagram illustrating an example of a decision area;
FIG. 10 is a diagram for describing operation of a teammate player control section;
FIG. 11 is a flowchart illustrating a process which is executed by the game device;
FIG. 12 is a flowchart illustrating a process which is executed by the game device;
FIG. 13 is a diagram for describing correction of a moving direction candidate;
FIG. 14 is a diagram for describing an example of segmentation of a pitch;
FIG. 15 is a diagram illustrating an example of teamwork level parameter data; and
FIG. 16 is a diagram illustrating an overall configuration of a program delivery system according to another embodiment of the present invention.

### BEST MODE FOR CARRYING OUT THE INVENTION

Hereinafter, detailed description is given of an example of an embodiment of the present invention based on the drawings. A game device according to the embodiment of the present invention is implemented by, for example, a consumer game machine (stationary type game machine), a portable game machine, a mobile phone, a personal digital assistant (PDA), or a personal computer. Herein, description is given of a case where the game device according to the embodiment of the present invention is implemented by a consumer game machine.

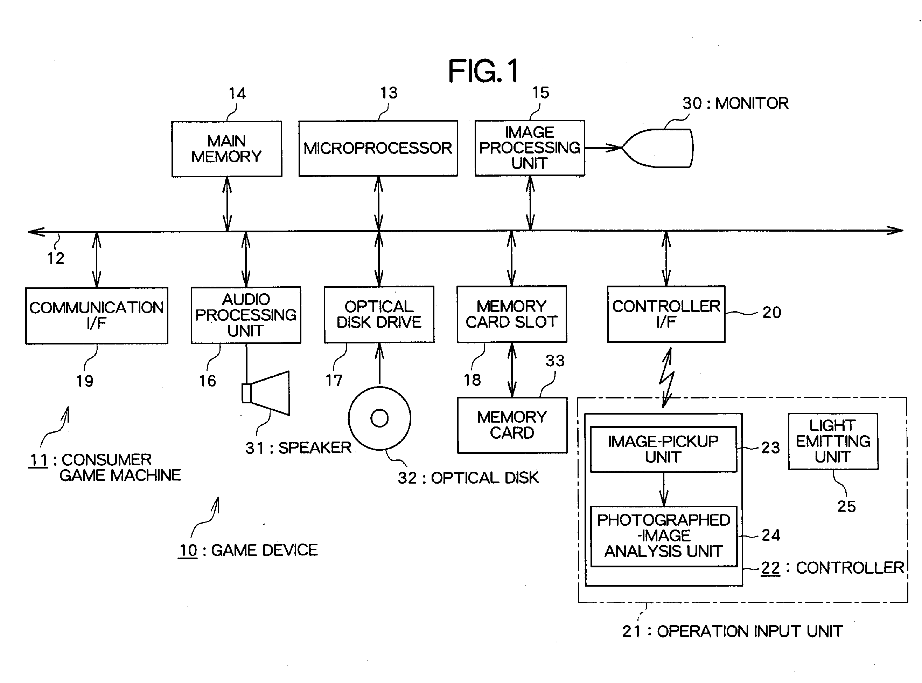

FIG. 1 illustrates a configuration of the game device according to the embodiment of the present invention. A game device 10 illustrated in FIG. 1 includes a consumer game machine 11, a monitor 30, a speaker 31, an optical disk 32, and a memory card 33. The monitor 30 and the speaker 31 are connected to the consumer game machine 11. The optical disk 32 and the memory card 33 are information storage media, and mounted to the consumer game machine 11. A household television set, for example, is used as the monitor 30. A speaker built into the household television set, for example, is used as the speaker 31. A CD-ROM or a DVD-ROM, for example, is used as the optical disk 32.

The consumer game machine 11 is a well-known computer game system. The consumer game machine 11 includes a bus 12, a microprocessor 13, a main memory 14, an image processing unit 15, an audio processing unit 16, an optical disk drive 17, a memory card slot 18, a communication interface (I/F) 19, a controller interface (I/F) 20, and an operation input unit 21. The constituent components other than the operation input unit 21 are accommodated in a casing of the consumer game machine 11.

The bus 12 is for exchanging addresses and data among the units of the consumer game machine 11. The microprocessor 13, the main memory 14, the image processing unit 15, the audio processing unit 16, the optical disk drive 17, the memory card slot 18, the communication interface 19, and the controller interface 20 are connected via the bus 12 so as to communicate data with one another.

The microprocessor 13 controls the individual units of the consumer game machine 11 on the basis of an operating system stored in a ROM (not shown), or a program or data read from the optical disk 32 or the memory card 33. The main memory 14 includes, for example, a RAM. The program or data read from the optical disk 32 or the memory card 33 are written on the main memory 14 if necessary. The main memory 14 is also used for operations of the microprocessor 13.

The image processing unit 15 includes a VRAM, and, based on image data sent from the microprocessor 13, renders a game screen on the VRAM. Then, the image processing unit 15 converts the game screen into video signals and outputs the video signals to the monitor 30 at predetermined times. The audio processing unit 16 includes a sound buffer. The audio processing unit 16 reproduces the various categories of sound data (game music, game sound effect, message, and the like) read from the optical disk 32 to the sound buffer, and outputs the reproduced sound data from the speaker 31.

The optical disk drive 17 reads the program or data recorded on the optical disk 32 in accordance with an instruction given from the microprocessor 13. In this case, the optical disk 32 is employed for supplying the program or data to the consumer game machine 11, but any other information storage media such as the memory card 33 may also be used. Further, the program or data may also be supplied to the consumer game machine 11 from a remote location via a data communication network such as the Internet.

The memory card slot 18 is an interface for mounting of the memory card 33. The memory card 33 includes a nonvolatile memory (for example, EEPROM), and stores various kinds of game data such as saved data. The communication interface 19 is an interface for communicative connection to a data communication network such as the Internet.

The controller interface 20 is an interface for allowing a plurality of controllers 22 to perform wireless connection. As the controller interface 20, it is possible to use, for example, an interface conforming to the Bluetooth interface standards. Note that the controller interface 20 may be an interface for allowing the controller 22 to perform wired connection.

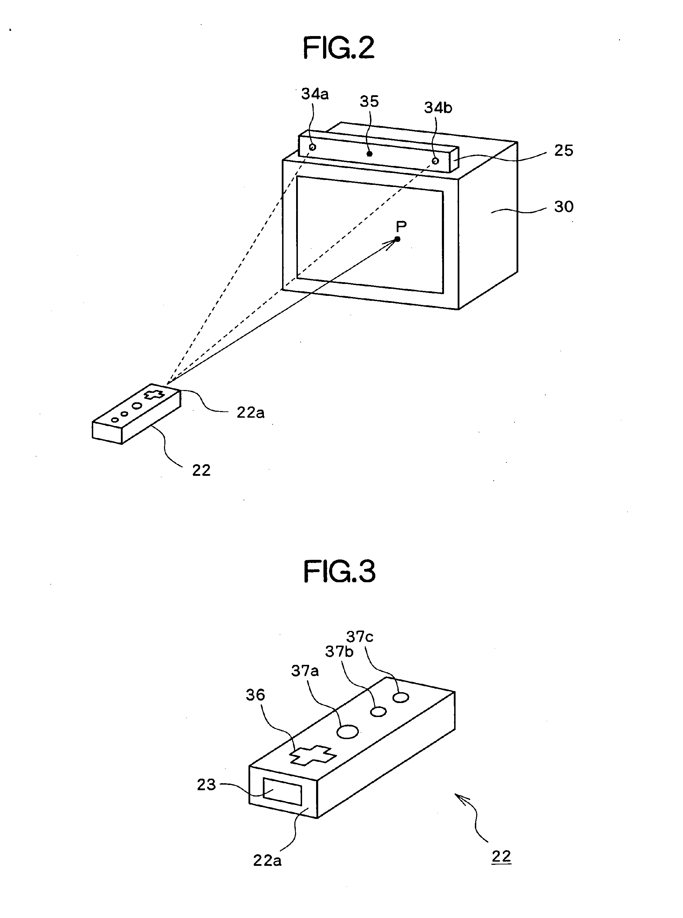

The operation input unit 21 is used for allowing a user to perform an operation input. The operation input unit 21 has a function as, for example, a pointing device for allowing the user to point to a position on the game screen displayed on the monitor 30. As the operation input unit 21, it is possible to use, for example, technology disclosed in JP 3262677 B. The operation input unit 21 includes one or a plurality of controllers 22 and a light emitting unit 25. FIG. 2 illustrates an example of the operation input unit 21, and FIG. 3 illustrates an example of the controller 22.

As illustrated in FIG. 2, the light emitting unit 25 includes a plurality of light sources and is disposed on top of the monitor 30. In the example illustrated in FIG. 2, the light emitting unit 25 is provided with light sources 34a and 34b on both end portions thereof. It should be noted that the light emitting unit 25 may be disposed under the monitor 30.

As illustrated in FIG. 3, the controller 22 includes a direction button 36 and buttons 37a, 37b, and 37c. The direction button 36 has a cross shape, and is generally used for a direction instruction operation. The buttons 37a, 37b, and 37c are used for various kinds of game operations. Further, as illustrated in FIG. 1, the controller 22 also includes an image-pickup unit 23 and a photographed-image analysis unit 24. The image-pickup unit 23 is an image-pickup element, such as a CCD, and is provided to a front end portion 22a (one of the side surfaces) of the controller 22. The photographed-image analysis unit 24 is, for example, a microprocessor, and is built into the controller 22.

When the user aims the front end portion 22a of the controller 22 at the monitor 30, the light sources 34a and 34b are reflected on a photographed image of the image-pickup unit 23. The photographed-image analysis unit 24 analyzes the positions of the light sources 34a and 34b reflected on the photographed image of the image-pickup unit 23, and acquires a position and an inclination of the controller 22 based on the analysis results. For example, the photographed-image analysis unit 24 calculates a relative position of the controller 22 with respect to a predetermined reference position 35 and an inclination angle of the controller 22 with respect to a straight line that connects the light sources 34a and 34b. The game device 10 stores information related to a positional relationship between the reference position 35 and a game screen displayed on the monitor 30, and based on the information and the position and the inclination of the controller 22 acquired by the photographed-image analysis unit 24, a screen coordinate value (coordinate value of screen coordinate system) of a position (P) pointed to by the front end portion 22a of the controller 22 is acquired. Note that, hereinafter, the position (P) pointed to by the front end portion 22a of the controller 22 is referred to as a "designated position of the controller 22". In addition, the information indicating the position and the inclination of the controller 22 acquired by the photographed-image analysis unit 24, that is, information for identifying the screen coordinate value of the designated position of the controller 22 is referred to as "pointing information".

An operation signal indicating an operation state of the controller 22 is transmitted every predetermined cycle (for example, every 1/60^{th} of a second) from the controller 22 to the microprocessor 13 via the controller interface 20. The operation signal includes, for example, identification information for identifying the controller 22, the above-mentioned pointing information, and information indicating a depression state of each button. Based on the operation signal supplied from each controller 22, the microprocessor 13 specifies the designated position of the controller 22 or determines whether or not the direction button 36 or the button 37a, 37b, or 37c is depressed on the controller 22.

On the game device 10 provided with the above-mentioned configuration, for example, a soccer game between a user's operation subject team and an opposing team is executed. The soccer game is realized by executing a program read from the optical disk 32.

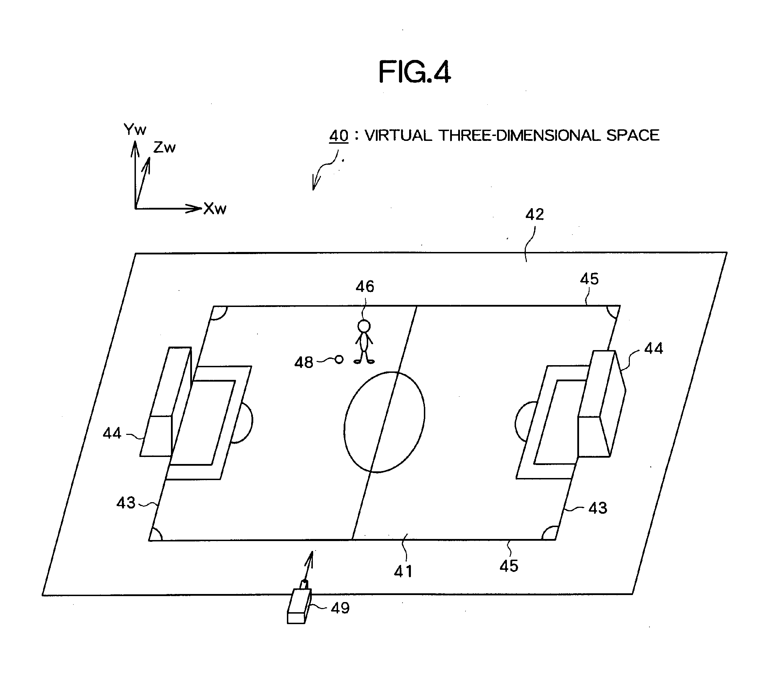

A virtual three-dimensional space (game space) is built in the main memory 14. FIG. 4 illustrates an example of the virtual three-dimensional space. As illustrated in FIG. 4, a field object 42 representing a soccer field is located in a virtual three-dimensional space 40. For example, goal lines 43 (end lines), touch lines 45 (side lines), and the like, are displayed on the field object 42. A soccer match is played within a pitch 41 which is an area surrounded by the goal lines 43 and the touch lines 45. Goal objects 44 each representing a goal, player objects 46 (player characters) representing soccer players, and a ball object 48 representing a soccer ball are located on the field object 42.

Though not illustrated in FIG. 4, eleven player objects 46 selected by a user from among a plurality of the player objects 46 (e.g., twenty player objects 46) belonging to the user's operation subject team are located on the field object 42. Likewise, eleven player objects 46 selected by the microprocessor 13 or an opposing user from among a plurality of the player characters 46 (e.g., twenty player objects 46) belonging to an opposing team are located on the field object 42. As in an actual soccer match, the player objects 46 (player objects 46 who participate in the match) placed in the virtual three-dimensional space 40 are determined at the time when the game starts, and are changed during the game or at half time.

If a player object 46 and the ball object 48 come close to each other, the player object 46 and the ball object 48 are associated with each other under a predetermined condition. In this case, the ball object 48 moves according to the movement of the player object 46. This state is represented by the dribbling action of the player object 46. The state where the ball object 48 is associated with the player object 46 is hereinafter referred to as "a state where the player object 46 is holding the ball object 48".

One of the goal objects 44 is associated with the user team while the other goal object 44 is associated with the opposing team. If the ball object 48 moves in the goal object 44 associated with one of the teams, a scoring event for the other team occurs.

Further, a virtual camera 49 (viewpoint) is set in the virtual three-dimensional space 40. For example, the virtual camera 49 moves in the virtual three-dimensional space 40 based on the movement of the ball object 48.

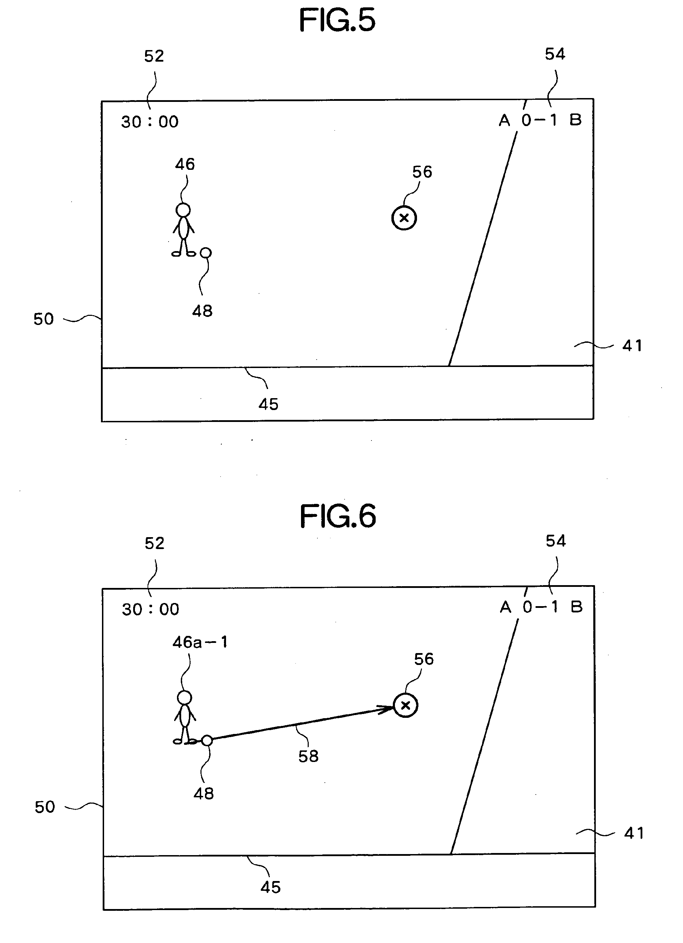

FIG. 5 illustrates an example of a game screen 50. As illustrated in FIG. 5, an image representing a state of the virtual three-dimensional space 40 viewed from the virtual camera 49 is displayed on the game screen 50. Further, the game screen 50 includes a time field 52 indicating a time course, and a score field 54 indicating a scoring situation. Further, a cursor 56 indicating the designated position of the controller 22 of the user is displayed on the game screen 50. In FIG. 5, the cursor 56 has a circular shape. However, the shape of the cursor 56 may be a shape other than the circular shape.

The user can instruct a moving direction, a kick direction or the like to a player object 46 belonging to the operation subject team. The following describes how to instruct the moving direction and the kick direction of a player object 46.

First, the user selects a player object 46 which is to be instructed. That is, the user points to a player object 46 which is to be instructed with the front end portion 22a of the controller 22 to move the cursor 56 to the player object 46. If the user depresses a selection button (e.g., button 37b) in this state, the player object 46 is selected as an operation subject (instruction subject). The player object 46 which is selected as the operation subject is hereinafter referred to as "operation-subject player object".

The operation-subject player object moves toward the position of the cursor 56 (position in the virtual three-dimensional space 40 which corresponds to the display position of the cursor 56). Therefore, the user can instruct the moving direction of the operation-subject player object by pointing in the direction with the front end portion 22a of the controller 22.

The user can also set a movement target position for the operation-subject player object. In the case of setting a movement target position for the operation-subject player object, the user moves the cursor 56 to a desired movement target position from the operation-subject player object while depressing a movement-target-position setting button (e.g., button 37c). FIG. 6 illustrates an example of the game screen 50 in this case. As illustrated in FIG. 6, an arrow image 58 from the operation-subject player object to the cursor 56 is displayed on the game screen 50 in this case. If the user releases the depression of the movement-target-position setting button in this state, the position of the cursor 56 at that point in time (position within the virtual three-dimensional space 40 which corresponds to the display position of the cursor 56) is set as the movement target position for the operation-subject player object. The operation-subject player object whose movement target position has been set keeps moving toward the movement target position regardless of the position of the cursor 56. In this case, even after the user selects another player object 46 as an operation subject, the player object 46 which has been the operation-subject player object keeps moving toward the movement target position.

When the operation-subject player object is holding the ball object 48, the user can instruct the kick direction of the operation-subject player object by pointing in the direction with the front end portion 22a of the controller 22. That is, if the user depresses a kick instruction button (e.g., button 37a), the direction toward the position of the cursor 56 (position within the virtual three-dimensional space 40 which corresponds to the display position of the cursor 56) is set as the kick direction, and the operation-subject player object kicks the ball object 48 in the kick direction. If the user depresses the kick instruction button with the cursor 56 moved to another player object 46, for example, the operation-subject player object make a pass to this player object 46.

Player objects 46 other than the player object 46 selected as the operation-subject player object act according to a predetermined action decision algorithm.

The following describes technology for causing the game device 10 to favorably perform movement control on teammate player objects in a case where the movement target position is set for the operation-subject player object.

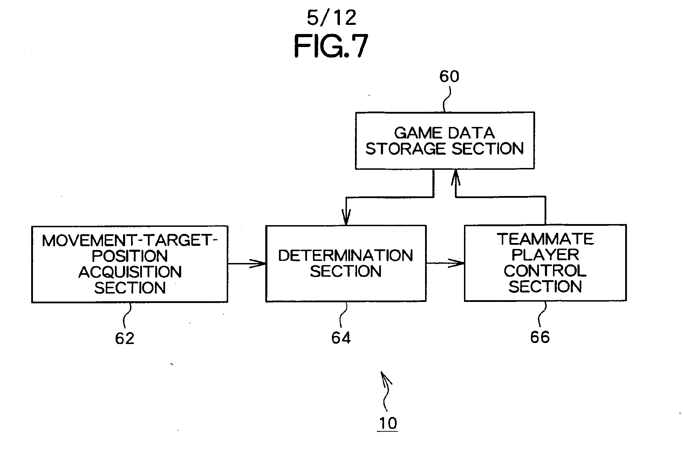

FIG. 7 is a functional block diagram mainly illustrating functions relevant to the present invention among the functions realized by the game device 10. As illustrated in FIG. 7, the game device 10 includes a game data storage section 60 (player-character position storage means), a movement-target-position acquisition section 62, a determination section 64, and a teammate player control section 66. Those functional blocks are realized when the microprocessor 13 executes the program.

The game data storage section 60 is realized by, for example, the main memory 14 or the optical disk 32. The game data storage section 60 stores game data for executing a soccer game. The game data storage section 60 stores, for example, model data indicating the shape of each object, motion data indicating various motions of the player objects 46, and ability parameter data indicating the levels of various abilities (e.g., pass ability, shooting ability, dribble ability, and so forth) of each player object 46.

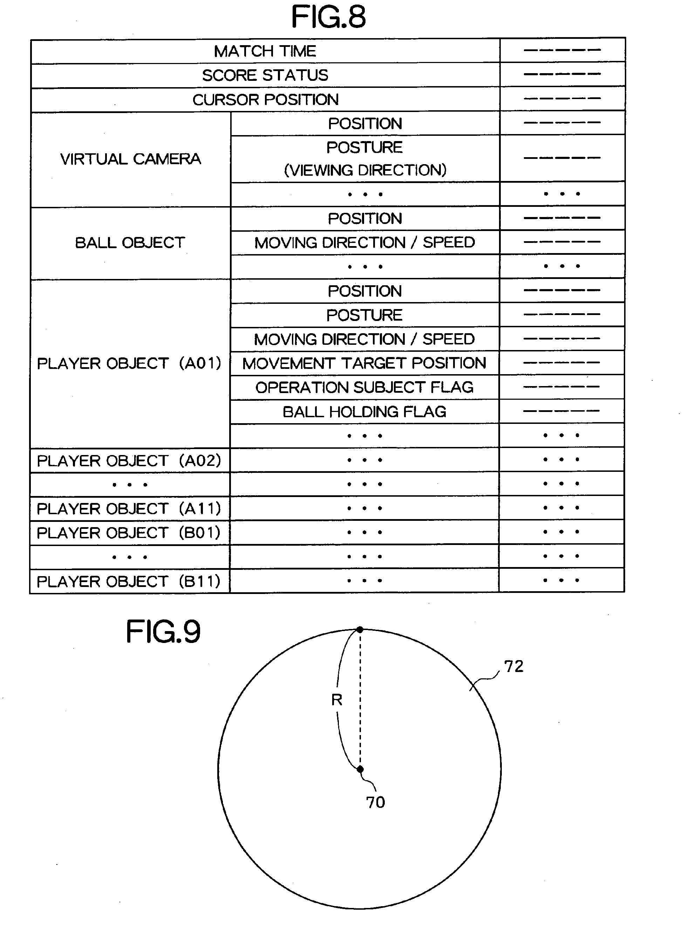

The game data storage section 60 also stores game situation data indicating the current situation of the game. FIG. 8 illustrates an example of game situation data. The game situation data includes match time data and score status data. The game situation data also includes position data of the cursor 56. The position data of the cursor 56 is data indicating, for example, a display position of the cursor 56 and a position within the virtual three-dimensional space 40 which corresponds to the display position of the cursor 56. The game situation data includes state data of the virtual camera 49 and state data of the ball object 48. The state data of the virtual camera 49 includes position data, posture (viewing direction) data, and the like. The state data of the ball object 48 includes position data, moving direction/speed data, and the like.

The game situation data further includes state data of each player object 46 placed in the virtual three-dimensional space 40. The state data of the player object 46 includes position data, posture data, moving direction/speed data, movement target position data, an operation subject flag, a ball holding flag, and the like. The movement target position data is data indicating the movement target position set for the player object 46. The "operation subject flag" is data indicating whether or not the player object 46 is being selected as the operation-subject player object. The "ball holding flag" is data indicating whether or not the player object 46 is holding the ball object 48. In FIG. 8, "player object (A01)", "player object (A02)" and "player object (A11)" indicate player objects 46 of the user's operation subject team, while "player object (B01)" and "player object (B11)" indicate player objects 46 of the opposing team.

The movement-target-position acquisition section 62 is realized mainly by the microprocessor 13. The movement-target-position acquisition section 62 acquires the movement target position of the operation-subject player object based on the contents of the user's operation. That is, the movement-target-position acquisition section 62 receives an operation to designate the movement target position of the operation-subject player object. Then, the movement-target-position acquisition section 62 acquires the movement target position of the operation-subject player object that is designated by the user.

The determination section 64 is realized mainly by the microprocessor 13. In a case where the user designates the movement target position of the operation-subject player object, the determination section 64 determines whether or not a teammate player object (another player object 46 belonging to the user's operation subject team) is positioned in a decision area which is specified based on the movement target position. FIG. 9 illustrates an example of the decision area. A decision area 72 illustrated in FIG. 9 is an area lying within a predetermined distance (R) from a movement target position 70 of the operation-subject player object.

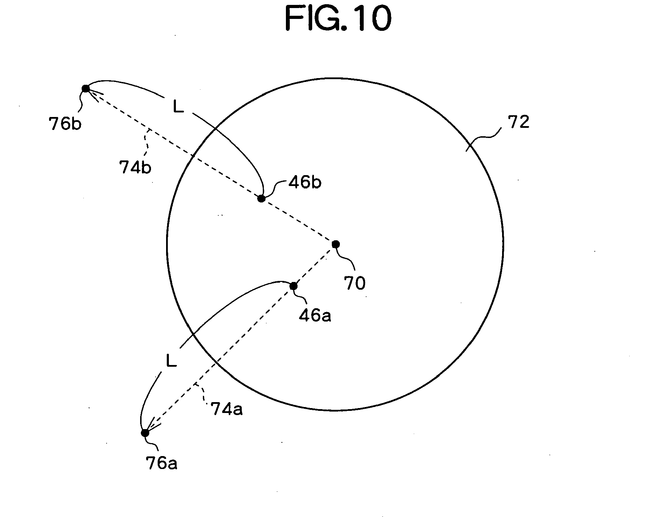

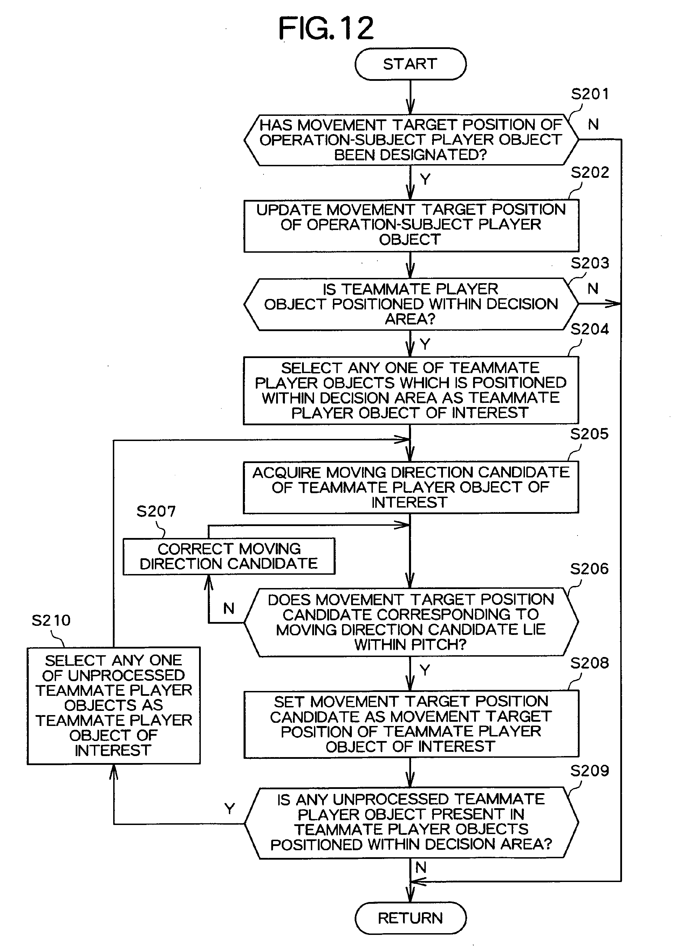

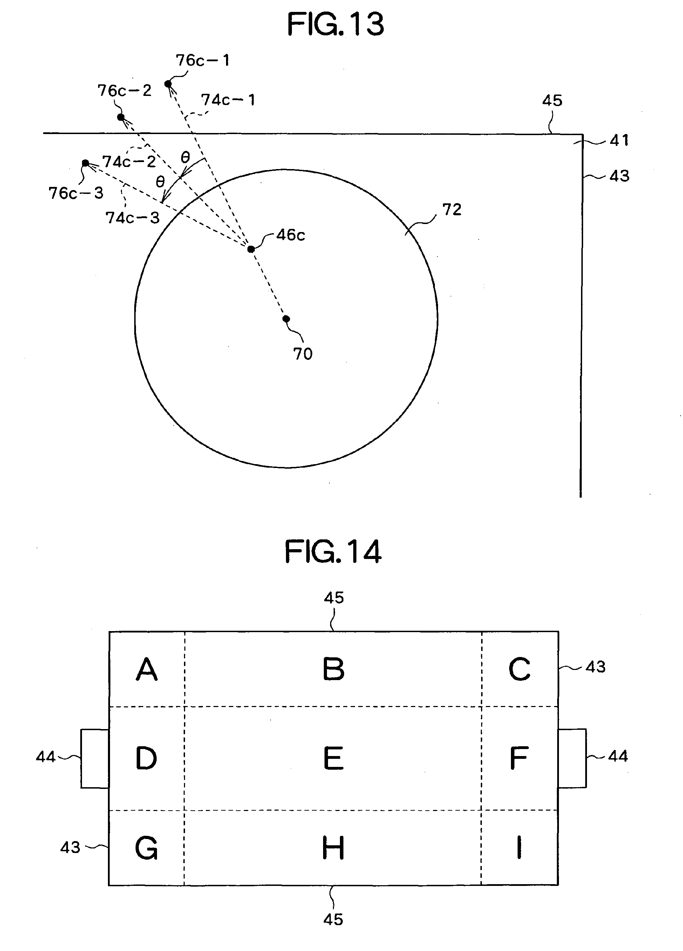

The teammate player control section 66 is realized mainly by the microprocessor 13. In a case where it is determined that a teammate player object is positioned within the decision area 72, the teammate player control section 66 moves the teammate player object away from the movement target position. According to this embodiment, in a case where it is determined that a teammate player object is positioned within the decision area 72, the teammate player control section 66 decides the moving direction of the teammate player object based on the direction from the movement target position to the current position of the teammate player object. FIG. 10 is a diagram for describing an example of the operation of the teammate player control section 66. In the example illustrated in FIG. 10, teammate player objects 46a and 46b are positioned within the decision area 72. In this case, the teammate player control section 66 sets the movement target positions of the teammate player objects 46a and 46b as follows, and causes the teammate player objects 46a and 46b to start moving toward the movement target positions. The movement target position of the teammate player object 46a is set to a position 76a shifted by a predetermined distance (L) from the current position of the teammate player object 46a in a direction 74a of a straight line extended from the movement target position 70 of the operation-subject player object toward the current position of the teammate player object 46a. Likewise, the movement target position of the teammate player object 46b is set to a position 76b shifted by a predetermined distance (L) from the current position of the teammate player object 46b in a direction 74b of a straight line extended from the movement target position 70 of the operation-subject player object toward the current position of the teammate player object 46b. The predetermined distance (L) is set equal to or greater than, for example, the radius (R) of the decision area 72. In this case, the movement target positions of the teammate player objects 46a and 46b are set in such a way that the movement target positions do not lie outside the pitch 41 (predetermined area). The details are given later (refer to S206 and S207 of FIG. 12, and FIG. 13).

Next, a description is given of processes which the game device 10 executes to realize the functional blocks described above.

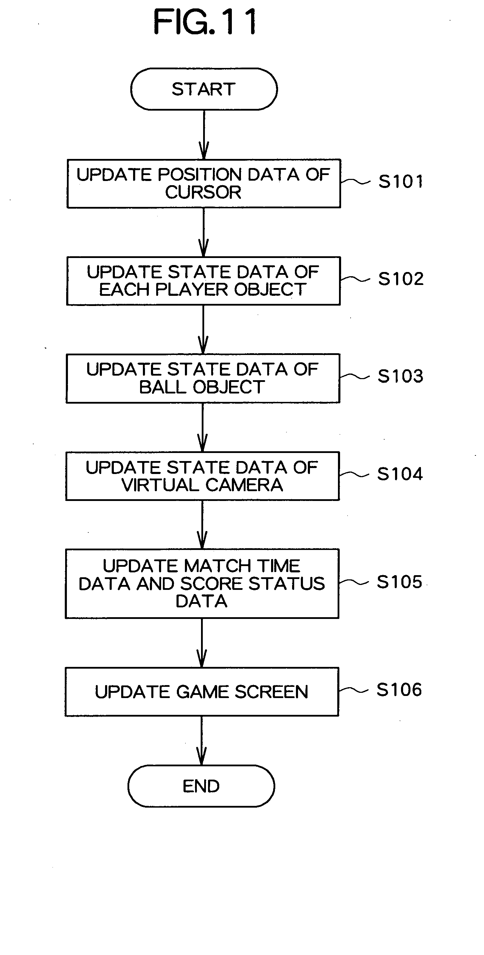

FIG. 11 is a flowchart illustrating a process which the game device 10 executes at every predetermined time (e.g., every 1/60^{th} of a second). The microprocessor 13 executes the process illustrated in FIG. 11 according to a program stored on the optical disk 32.

As illustrated in FIG. 11, the microprocessor 13 updates position data of the cursor 56 based on an operation signal (pointing information) supplied from the controller 22 (S101). The microprocessor 13 also updates state data of each player object 46 (S102).

FIG. 12 is a flowchart illustrating a process which is executed as a part of the process of this step (S102). In the process illustrated in FIG. 12, first, the microprocessor 13 (movement-target-position acquisition section 62) determines whether or not the user has set the movement target position for the operation-subject player object (S201). That is, it is determined whether or not an operation to designate the movement target position has been performed based on the operation signal supplied from the controller 22. In a case where the movement target position is set for the operation-subject player object, the microprocessor 13 (movement-target-position acquisition section 62) updates the movement target position data of the operation-subject player object, and sets a position within the virtual three-dimensional space 40 which corresponds to the display position of the cursor 56 at that time point as the movement target position of the operation-subject player object (S202).

Thereafter, the microprocessor 13 (determination section 64) determines whether or not any teammate player objects are positioned within the decision area 72 (S203). The decision area 72 is an area apart from the movement target position of the operation-subject player object (movement target position designated by the user) by the predetermined distance (R) or less (see FIG. 9). In a case where some teammate player objects are positioned within the decision area 72, the microprocessor 13 selects any one of the teammate player objects positioned within the decision area 72 as a teammate player object of interest (S204). Then, the microprocessor 13 (teammate player control section 66) executes processes (S205 to S208) to be described below with the teammate player object of interest taken as a process target.

That is, the microprocessor 13 acquires a direction of a straight line extended from the movement target position of the operation-subject player object toward the current position of the teammate player object of interest as a candidate for the moving direction of the teammate player object of interest (S205). If the teammate player object 46a illustrated in FIG. 10 is a teammate player object of interest, for example, the direction 74a of the straight line extending from the movement target position 70 of the operation-subject player object toward the current position of the teammate player object 46a is acquired as a moving direction candidate.

Thereafter, the microprocessor 13 determines whether or not a movement target position candidate corresponding to the moving direction candidate lies within the pitch 41 (S206). In this step, first, a position shifted from the current position of the teammate player object of interest toward the moving direction candidate by the predetermined distance (L) is acquired as the movement target position candidate. If the teammate player object 46a of FIG. 10 is the teammate player object of interest, for example, the position 7 6a which is shifted from the current position of the teammate player object 46a in the direction 74a (moving direction candidate) by the predetermined distance (L) is acquired as the movement target position candidate. Then, it is determined whether or not the movement target position candidate lies within the pitch 41. In other words, in this step, in a case where it is assumed that the teammate player object of interest keeps moving from its current position toward the moving direction candidate, it is determined whether or not the moving distance to the boundary of the pitch 41 (goal lines 43 or touch lines 45) is equal to or greater than the predetermined distance (L). When the moving distance to the boundary of the pitch 41 (goal lines 43 or touch lines 45) is equal to or greater than the predetermined distance (L), the teammate player object of interest does not move out of the pitch 41 even if the teammate player object of interest moves from the current position toward the moving direction candidate by the predetermined distance (L). That is, the movement target position candidate lies within the pitch 41 in this case.

In a case where the movement target position candidate does not lie within the pitch 41, the microprocessor 13 corrects the moving direction candidate (S207). FIG. 13 is a diagram for describing this process. As illustrated in FIG. 13, for example, the microprocessor 13 acquires a direction which is acquired by rotating the moving direction candidate in a predetermined direction (e.g., counterclockwise direction) by a predetermined angle (θ) as a new moving direction candidate. In this case, the current position of the teammate player object is set to the center of rotation. The movement target position 70 of the operation-subject player object may be set to the center of rotation. Then, the microprocessor 13 determines whether or not the movement target position candidate corresponding to the corrected moving direction candidate lies within the pitch 41 (S206). The correction of the moving direction candidate is repeated until the movement target position candidate lies within the pitch 41. In the case of a teammate player object 46c illustrated in FIG. 13, for example, a direction 74c-1 of a straight line extended from the movement target position 70 of the operation-subject player object toward the current position of the teammate player object 46c is acquired as the moving direction candidate in S205. However, a movement target position candidate 76c-1 corresponding to the moving direction candidate (direction 74c-1) lies outside the pitch 41. Accordingly, the moving direction candidate is corrected to acquire a direction 74c-2 as a new moving direction candidate. However, a movement target position candidate 76c-2 corresponding to the moving direction candidate (direction 74c-2) also lies outside the pitch 41. Accordingly, correction of the moving direction candidate is carried out again to acquire a direction 74c-3 as a new moving direction candidate. A movement target position candidate 76c-3 corresponding to the moving direction candidate (direction 74c-3) lies within the pitch 41, and hence correction of the moving direction candidate is not carried out. Then, a process of S208 to be described below is executed.

In a case where the movement target position candidate lies within the pitch 41, on the other hand, the microprocessor 13 updates movement target position data of the teammate player object of interest, and sets the movement target position candidate as the movement target position of the teammate player object of interest (S208).

Thereafter, the microprocessor 13 determines whether or not any teammate player object which has not undergone the processes of S205 to S208 is present in those teammate player objects positioned in the decision area 72 (S209). If there is such a teammate player object, the microprocessor 13 selects any one of such teammate player objects as a new teammate player object of interest (S210). Then, the microprocessor 13 executes the foregoing processes (S205 to S208) with the teammate player object of interest taken as a process target. If there is no such teammate player object, on the other hand, i.e., if the processes of S205 to S208 have already been performed on every teammate player object positioned in the decision area 72, the process is terminated.

In the process of S102, processing which is described below, for example, is executed in addition to the above-mentioned process (see FIG. 12). For example, state data of the player object 46 whose movement target position is set is updated in such a way that the player object 46 moves toward the movement target position. More specifically, the position data of the player object 46 whose movement target position is set is updated, and hence the position of the player object 46 is updated to the position which is shifted from the current position in the direction of the movement target position by a distance according to the moving speed of the player object 46. If the player object 46 whose movement target position is set reaches the movement target position, for example, the setting of the movement target position is canceled. If the movement target position is not set for the operation-subject player object, for example, the state data of the operation-subject player object is updated in such a way that the operation-subject player object moves toward a position in the virtual three-dimensional space 40 which corresponds to the display position of the cursor 56. If it is determined based on the operation signal supplied from the controller 22 that the kick instruction button is depressed, for example, the state data of the operation-subject player object is updated in such a way that the operation-subject player object performs a kick motion. In addition, for example, the state data of the player objects 46 other than the operation-subject player object is updated according to the predetermined action decision algorithm.

As illustrated in FIG. 11, after update of the state data of each player object 46, the microprocessor 13 updates the state data of the ball object 48 (S103). For example, the position data of the ball object 48 is updated, and hence the position of the ball object 48 is updated to a position shifted from the current position in the moving direction by a distance according to the moving speed. If any one of player objects 46 kicks the ball object 48, for example, the state data of the ball object 48 is updated in such a way that the ball object 48 moves in the kick direction.

Thereafter, the microprocessor 13 updates the state data of the virtual camera 49 (S104). For example, the state data of the virtual camera 49 is updated based on the position of the ball object 48, or the like. Further, the microprocessor 13 updates match time data or score status data (S105). If the ball object 48 moves into the goal object 44 of one team, for example, a scoring event for the other team occurs, incrementing the score of the other team.

Thereafter, the microprocessor 13 and the image processing section 15 update the game screen 50 based on the game situation data (S106). First, an image viewing the virtual three-dimensional space 40 from the virtual camera 49 is rendered in the VRAM. Thereafter, a time field 52 and a score field 54 are rendered over the image rendered in the VRAM at predetermined positions. Further, the cursor 56 is also rendered over the image rendered in the VRAM. The image rendered in the VRAM in this manner is displayed on the monitor 30 as the game screen 50.

If a movement target position is set for an operation-subject player object in the game device 10 described above, teammate player objects are controlled so as to move away from the movement target position. Therefore, the game device 10 can prevent the teammate player object from interfering with viewing of the operation-subject player object.

The game device 10 can also reduce the processing load that relates to the display of the game screen 50. When an area which is crowded with a plurality of player objects 46 is displayed on the game screen 50, an arithmetic operation (coordinate conversion calculation or the like) should be performed for each of the player objects 46, thus making the processing load heavier. However, according to the game device 10, teammate player objects are controlled in such a way as to move away from the movement target position of the operation-subject player object, and hence it is possible to reduce the number of the player objects 46 which are positioned near the movement target position of the operation-subject player object. This results in reduction in the processing load associated with the display of the game screen 50 when an area near the movement target position of the operation-subject player object is displayed on the game screen 50. According to the game device 10, teammate player objects are controlled in such a way as to move away from the movement target position of the operation-subject player object, thus reducing the frequency with which the operation-subject player object is positioned close to one or a plurality of teammate player objects. That is, according to the game device 10, the frequency with which a plurality of player objects 46 (operation-subject player object and one or plurality of teammate player objects) are displayed on the game screen 50 at a time is reduced. This results in reduction in the processing load associated with the display of the game screen 50.

It is to be noted that when there is an opposing player object (player object 46 belonging to the opposing team) which marks a teammate player object, the opponent player object also moves away from the movement target position in response to the motion of the teammate player object. As a result, the user can enj oy the movement of the teammate player object to create space near the movement target position of the operation-subject player object.

According to the game device 10, a teammate player object positioned near the movement target position of the operation-subject player object is controlled in such a way as to move in the direction of a straight line extending from the movement target position toward the current position of the teammate player object (see FIG. 10). Accordingly, the user can set the movement target position of the operation-subject player object to instruct the moving direction of the teammate player object as well. That is, the user can move a teammate player object in a desirable direction by setting the movement target position of the operation-subject player object so that the direction of a straight line extending from the movement target position of the operation-subject player object toward the current position of the teammate player object matches the desirable direction.

According to the game device 10, the processes of S206 and S207 of FIG. 12 are executed to inhibit a teammate player object from going out of the pitch 41. In a case where a teammate player object is moved away from the movement target position of the operation-subject player object, if the teammate player obj ect goes out of the pitch 41, the user may have an awkward feeling. The game device 10, however, can prevent the user from having such an awkward feeling.

The present invention is not limited to the foregoing embodiment.

For example, the pitch 41 may be divided into a plurality of partial areas and moving direction data (moving direction information) relating to the moving direction of a teammate player object which is positioned within the decision area 72 may be stored in association with the respective partial areas. For example, the moving direction data indicates the moving direction that can be set for a teammate player object which is positioned within the decision area 72. The moving direction data may be data indicating the moving direction that cannot be set for a teammate player object which is positioned within the decision area 72. FIG. 14 is a diagram for describing one example of segmentation of the pitch 41. In the example illustrated in FIG. 14, the pitch 41 is divided into nine partial areas A to I. For example, moving direction data indicating a range of the moving direction which inhibits a teammate player object from going over the goal line 43 or the touch line 45 is associated with the partial areas A, C, G and I adjoining both the goal line 43 and the touch line 45. Further, for example, moving direction data indicating a range of the moving direction which inhibits a teammate player object from going over the goal line 43 is associated with the partial areas D and F adjoining the goal line 43. Further, for example, moving direction data indicating a range of the moving direction which inhibits a teammate player object from going over the touch line 45 is associated with the partial areas B and H adjoining the touch line 45.

In this case, in the process illustrated in FIG. 12, the microprocessor 13 (teammate player control section 66) executes processes as described below in place of the processes of S205 to S208. That is, the microprocessor 13 specifies a partial area in which a teammate player object of interest is positioned. Next, the microprocessor 13 reads moving direction data associated with the partial area in which the teammate player object of interest is positioned, and decides the moving direction of the teammate player object of interest within the range of the moving direction indicated by the moving direction data. Then, the microprocessor 13 sets a position shifted from the current position of the teammate player object of interest in the decided moving direction by a predetermined distance (L), as the movement target position of the teammate player object of interest.

Even with such setting performed, when a teammate player object is moved away from the movement target position of the operation-subject player object, the teammate player object can be prevented from going out of the pitch 41.

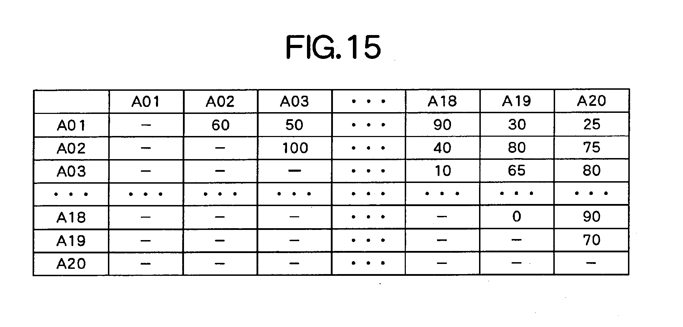

In addition, the game data storage section 60 may store, for example, a teamwork level parameter indicating the level of the teamwork (degree of the teamwork skill) of player objects 46 belonging to the user's operation subject team. FIG. 15 is a diagram illustrating one example of teamwork level parameter data. It is noted that, in FIG. 15, "A01", "A02", "A03", "A18", "A19", and "A20" indicate identification information (ID) of the player objects 46 belonging to the user's operation subject team, respectively. For each of player objects 46 belonging to the user's operation subject team, the teamwork level parameter data illustrated in FIG. 15 stores a teamwork level parameter indicating a teamwork level between that each player object 46 and each of other player objects 46. The teamwork level parameter takes any value from 0 to 100, and as the value of the teamwork level parameter becomes higher, the teamwork level is higher.

A description is now given of a case where the teamwork level parameter changes. The description is given of a case where the teamwork level parameter between a first player object 46 (e.g., player object 46 with an ID "A01") and a second player object 46 (e.g., player object 46 with an ID "A02") changes. If the first and second player objects 46 are both participating in a match, for example, the value of the teamwork level parameter between the first and second player objects 46 increases. If the positions (GK, DF, MF, FW) of the first and second player objects 46 are close to each other, for example, the value of the teamwork level parameter between the first and second player objects 46 increases.

If a pass between the first and second player objects 46 is successful, for example, the value of the teamwork level parameter between the first and second player objects 46 increases. If the second player object 46 which has received the pass from the first player object 46 gets a score, for example, the value of the teamwork level parameter between the first and second player objects 46 increases.

For example, the value of the teamwork level parameter between the first and second player objects 46 increases based on how an area in which the first player object 46 has acted during the match and an area in which the second player object 46 has acted during the match overlap. In this case, a process as described below, for example, is executed. That is, the pitch 41 is divided into n and m parts vertically and horizontally, respectively, whereby the pitch 41 is divided into nxm segments. For each of the segments, the time during which the first player object 46 has been positioned in the segment during the match is measured. For each of the segments, the time during which the second player object 46 has been positioned in the segment during the match is likewise measured. The value of the teamwork level parameter between the first and second player objects 46 increases based on the result of comparison between the result of measurement for the first player object 46 and the result of measurement for the second player object 46. For example, if the segment in which the first player object 46 has been positioned for the longest time coincides with the segment in which the second player object 46 has been positioned for the longest time, the value of the teamwork level parameter between the first and second player objects 46 increases.

The teammate player control section 66 may move a teammate player object based on the foregoing teamwork level parameter so that the teammate player object keeps away from the movement target position of the operation-subject player object. In the process illustrated in FIG. 12, for example, after execution of the process of S204 or S210 or before execution of the process of S205, the microprocessor 13 (teammate player control section 66) may execute a process as described below. Specifically, the microprocessor 13 reads the teamwork level parameter between the operation-subject player object and a teammate player object of interest. Next, the microprocessor 13 determines whether or not the value of the teamwork level parameter is equal to or greater than a predetermined reference value. If the value of the teamwork level parameter is equal to or greater than the predetermined reference value, the microprocessor 13 executes the processes of S205 to S208. If the value of the teamwork level parameter is not equal to or greater than the predetermined reference value, the microprocessor 13 executes the process of S209 without executing the processes of S205 to S208.

With the above-mentioned processing, in a case where the operation-subject player object and a teammate player object understand each other, the teammate player object acts so as not to interfere with the operation-subject player object (so as to create space for the operation-subject player object). As a result, the user can be made to feel whether or not the operation-subject player object and the teammate player object understand each other. That is, the user can be made to feel that the teamwork level between the operation-subject player object and the teammate player object is high (low).

Based on the value of the teamwork level parameter between the operation-subject player object and a teammate player object, the teammate player object may be caused to be stopped from starting to move. For example, if the value of the teamwork level parameter between the operation-subject player object and a teammate player object is equal to or greater than the predetermined reference value, the teammate player object may immediately start moving. On the other hand, if the value of the teamwork level parameter between the operation-subject player object and the teammate player object is not equal to or greater than the predetermined reference value, the teammate player object may start moving after a predetermined time elapses. Alternatively, the teammate player object may start moving after a suspension time, which is decided based on the value of the teamwork level parameter between the operation-subject player object and the teammate player object, elapses. In this case, data which associates the value of the teamwork level parameter with the suspension time is stored, and the suspension time is decided based on the data. The data may be of a table format or may be of an equation form. This data is set in such a way that as the teamwork level becomes higher, the suspension time becomes shorter.

With the above-mentioned processing, in a case where the operation-subject player object and a teammate player object understand each other, the teammate player object starts, in a relatively early stage, an action which prevents interference with the operation-subject player object (action to create space for the operation-subject player object). In a case where the operation-subject player object and the teammate player object do not understand each other, on the other hand, the teammate player object delays in starting the action which prevents interference with the operation-subject player object (action to create space for the operation-subject player object). Even with this processing, the user can be made to feel whether or not the operation-subject player object and the teammate player object understand each other. That is, the user can be made to feel that the teamwork level between the operation-subject player object and the teammate player object is high (low).

Further, in the process illustrated in FIG. 12, for example, before execution of the process of S203, the microprocessor 13 (teammate player control section 66) may determine whether or not the distance between the position of the operation-subject player object and the movement target position is equal to or less than a reference distance. If the distance is equal to or less than the reference distance, the microprocessor 13 may execute the processes of S203 to S210, and if the distance is not equal to or less than the reference distance, the microprocessor 13 may not execute the processes of S203 to S210.

This favorably demonstrates how communication between the operation-subject player object and a teammate player object is not carried out smoothly in a case where the distance between the operation-subject player object and the movement target position (teammate player object near the movement target position) is relatively long.

For example, the size of the decision area 72 may be changed based on the distance between the operation-subject player object and the movement target position. In a case of this embodiment, the length of the reference distance (R) may be changed based on the distance between the operation-subject player object and the movement target position. In this case, data which associates the distance between the operation-subject player object and the movement target position with the reference distance (R) is stored. In this case, in S203 of FIG. 12, based on the data, the microprocessor 13 (determination section 64) acquires the reference distance (R) corresponding to the distance between the current position of the operation-subject player object and the movement target position. Thereafter, the microprocessor 13 (determination section 64) determines whether or not the teammate player object is positioned in the decision area 72 in which the distance from the movement target position of the operation-subject player object (movement target position designated by the user) is equal to or less than the reference distance (R).

In this case, it is preferable that the above-mentioned data should be set in such a way that as the distance between the operation-subject player object and the movement target position increases, the decision area 72 becomes smaller. This makes the decision area 72 relatively narrow when the distance between the operation-subject player object and the movement target position (teammate player object near the movement target position) is relatively long. As a result, the space to be prepared for the operation-subject player object becomes relatively narrow. When the distance between the operation-subject player object and the movement target position (teammate player object near the movement target position) is relatively short, on the other hand, the decision area 72 becomes relatively wide. As a result, the space to be prepared for the operation-subject player object becomes relatively wide. Even this favorably demonstrates how the communication between the operation-subject player object and a teammate player object is carried out smoothly or not smoothly according to the distance between the operation-subject player object and the movement target position (teammate player object near the movement target position).

Further, for example, the game executed on the game device 10 is not limited to the game in which a three-dimensional game space constituted of three coordinate elements is displayed on the game screen 50. The game executed on the game device 10 may be a game in which a two-dimensional game space constituted of two coordinate elements is displayed on the game screen 50. That is, the game executed on the game device 10 may be a game in which the positions and the like of a ball character and player characters are managed by the two coordinate elements.

Further, for example, the game executed on the game device 10 may be a game played by two or more users. Further, for example, the game executed on the game device 10 is not limited to the soccer game. The game executed on the game device 10 may be a sports game other than the soccer game (basketball game, ice hockey game, or the like).

Further, for example, the operation input section 21 may be a touch panel, a mouse, or the like.

Further, for example, the cursor 56 may move according to the operation of the direction button 36. Further, by operating the direction button 36, the user may directly instruct the moving direction and the kick direction of a player object 46 to be instructed. In this case, the display of the cursor 56 can be omitted.

Moreover, for example, an object representing the cursor 56 may be placed in the virtual three-dimensional space 40 so that the cursor 56 is displayed on the game screen 50.

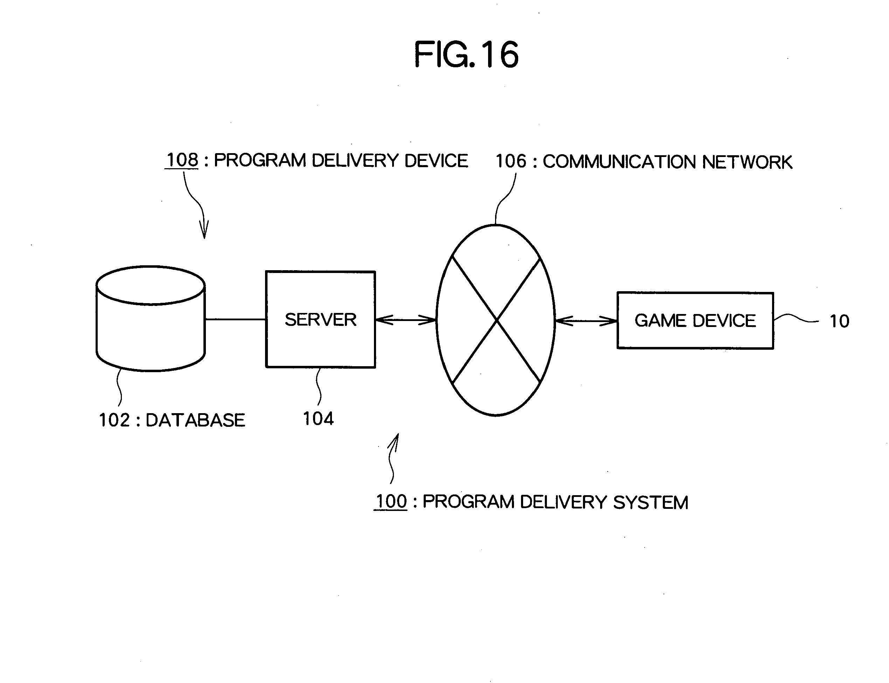

Further, for example, in the above-mentioned description, the program is supplied via the optical disk 32 serving as an information storage medium to the game device 10, but the program may be delivered to the game device 10 via a communication network. FIG. 16 is a diagram illustrating an overall configuration of a program delivery system using the communication network. Based on FIG. 16, description is given of a program delivery method according to the present invention. As illustrated in FIG. 16, the program delivery system 100 includes the game device 10, a communication network 106, and a program delivery device 108. The communication network 106 includes, for example, the Internet and a cable television network. The program delivery device 108 includes a game database 102 and a server 104. In this system, the same program as the program stored on the optical disk 32 is stored in the game database (information storage medium) 102. Then, a demander uses the game device 10 to make a game delivery request, whereby the game delivery request is transferred to the server 104 via the communication network 106. Then, the server 104 reads the program from the game database 102 according to the game delivery request, and transmits the program to the game device 10. Here, the game delivery is performed according to the game delivery request, but the server 104 may transmit the program one way. In addition, all of programs necessary to implement the game are not necessarily delivered at one time (delivered collectively), and necessary parts may be delivered (split and delivered) depending on which phase the game is in. By thus performing the game delivery via the communication network 106, the demander can obtain the program with ease.

## Claims

1. A game device that executes a sport game which is played between an operation subject team, to which an operation-subject player character which moves according to operation by a user and a teammate player character belong, and an opposing team, the game device comprising:
player-character position storage means for storing a position of the operation-subject player character and a position of the teammate player character;
movement-target position acquiring means for acquiring a movement target position of the operation-subject player character based on a content of the operation by the user;
determination means for determining whether or not the teammate player character is positioned within a decision area specified based on the movement target position; and
teammate player control means for moving the teammate player character away from the movement target position in a case where it is determined that the teammate player character is positioned within the decision area.

2. A game device according to claim 1, wherein the teammate player control means includes means for deciding a moving direction of the teammate player character based on a direction from the movement target position toward a current position of the teammate player character in the case where it is determined that the teammate player character is positioned within the decision area.

3. A game device according to claim 1, wherein:
the game includes a sport game which is played in a predetermined area; and
the teammate player control means controls the teammate player character so as not to move out of the predetermined area in a case of moving the teammate player character away from the movement target position.

4. A game device according to claim 3, wherein the teammate player control means includes:
means for deciding a moving direction of the teammate player character in the case where it is determined that the teammate player character is positioned within the decision area;
means for determining whether or not a moving distance to a boundary of the predetermined area is less than a predetermined reference distance in a case where it is assumed that the teammate player character is moved in the moving direction;
means for correcting the moving direction in a case where it is determined that the moving distance to the boundary of the predetermined area is less than the reference distance; and
means for moving the teammate player character in the moving direction by the reference distance.

5. A game device according to claim 3, wherein the teammate player control means includes:
means for storing moving direction information on a moving direction of the teammate player character in association with each of a plurality of partial areas set in the predetermined area; and
means for deciding the moving direction of the teammate player character based on the moving direction information associated with one of the plurality of partial areas which includes a current position of the teammate player character, in the case where it is determined that the teammate player character is positioned within the decision area.

6. A game device according to claim 1, further including parameter storage means for storing a teamwork level parameter indicating a teamwork level between the operation-subject player character and the teammate player character,
wherein the teammate player control means moves the teammate player character away from the movement target position based on the teamwork level parameter indicating the teamwork level between the operation-subject player character and the teammate player character, in the case where it is determined that the teammate player character is positioned within the decision area.

7. A game device according to claim 6, wherein the teammate player control means includes:
means for determining whether or not the teamwork level parameter satisfies a predetermined condition; and
means for moving the teammate player character away from the movement target position in a case where the teamwork level parameter indicating the teamwork level between the teammate player character, which is determined to be positioned within the decision area, and the operation-subject player character satisfies the predetermined condition.

8. A game device according to claim 6, wherein the teammate player control means includes means for waiting initiation of movement of the teammate player character based on the teamwork level parameter indicating the teamwork level between the teammate player character and the operation-subject player character.

9. A game device according to claim 1, wherein the determination means includes means for controlling a size of the decision area based on a distance between the operation-subject player character and the movement target position.

10. A game device according to claim 1, wherein the teammate player control means includes:
means for determining whether or not a distance between the operation-subj ect player character and the movement target position is equal to or less than a reference distance; and
means for moving the teammate player character away from the movement target position in a case where the distance between the operation-subj ect player character and the movement target position is equal to or less than the reference distance.

11. A control method for a game device that executes a sport game which is played between an operation subject team to which an operation-subject player character which moves according to operation by a user and a teammate player character belong, and an opposing team, the control method comprising:
a step of reading a stored content of player-character position storage means storing a position of the operation-subject player character and a position of the teammate player character;
a movement-target position acquiring step of acquiring a movement target position of the operation-subject player character based on a content of the operation by the user;
a determination step of determining whether or not the teammate player character is positioned within a decision area specified based on the movement target position; and
a teammate player control step of moving the teammate player character away from the movement target position in a case where it is determined that the teammate player character is positioned within the decision area.

12. A program for causing a computer to function as a game device that executes a sport game which is played between an operation subject team, to which an operation-subject player character which moves according to operation by a user and a teammate player character belong, and an opposing team, the program further causing the computer to function as:
player-character position storage means for storing a position of the operation-subject player character and a position of the teammate player character;
movement-target position acquiring means for acquiring a movement target position of the operation-subject player character based on a content of the operation by the user;
determination means for determining whether or not the teammate player character is positioned within a decision area specified based on the movement target position; and
teammate player control means for moving the teammate player character away from the movement target position in a case where it is determined that the teammate player character is positioned within the decision area.

13. A computer-readable information storage medium recording a program for causing a computer to function as a game device that executes a sport game which is played between an operation subject team, to which an operation-subject player character which moves according to operation by a user and a teammate player character belong, and an opposing team, the program further causing the computer to function as:
player-character position storage means for storing a position of the operation-subject player character and a position of the teammate player character;
movement-target position acquiring means for acquiring a movement target position of the operation-subject player character based on a content of the operation by the user;
determination means for determining whether or not the teammate player character is positioned within a decision area specified based on the movement target position; and
teammate player control means for moving the teammate player character away from the movement target position in a case where it is determined that the teammate player character is positioned within the decision area.
